# EUROPEAN PATENT SPECIFICATION

(11) **EP 1 577 970 B1**
(45) Date of publication and mention of the grant of the patent: **01.12.2010**
(21) Application number: 05006005.2
(22) Date of filing: 18.03.2005
(51) Int. Cl.: H01M 6/42, H01M 6/46, H01M 2/02

(54) **Accumulator structure**
Anordnung von Akkumulatoren
Arrangement d'accumulateur

(30) Priority: 19.03.2004 JP 2004081569
(43) Date of publication of application: 21.09.2005
(73) Proprietor: Fuji Jukogyo Kabushiki Kaisha, Tokyo (JP)
(72) Inventor: Sakurai, Masato, Fuji Jukogyo K.K., Shinkuku-ku Tokyo (JP)
(74) Representative: Sajda, Wolf E.

(56) References cited:
- GB-A- 761 629
- US-A- 3 655 452
- US-A- 6 145 280
- US-B1- 6 528 204
- PATENT ABSTRACTS OF JAPAN vol. 013, no. 350 (E-800), 7 August 1989 (1989-08-07) & JP 01 109664 A (MATSUSHITA ELECTRIC IND CO LTD), 26 April 1989 (1989-04-26)

## Description

### BACKGROUND OF THE INVENTION

The present invention relates to an accumulator structure in which a plurality of flat accumulators are flatly disposed in a common plane and electrically connected with each other.

In recent years, accumulators including rechargeable batteries such as lithium ion batteries and electrochemical capacitors such as electric double layer capacitors become more compact and lightweight and become to have higher energy density. These accumulators have actively been used as power sources for portable information communication equipments, electric automobiles or hybrid electric automobiles.

Inparticular, a laminate accumulator comprising: a package case made of a laminated sheet produced by coating both surfaces of a metal layer with resin layers; and generating elements (unit cells) enclosed in the laminated sheet case, can be formed into a thin flat shape. Therefore, the laminate accumulator is useful for reducing the size and weight of a power supply device, and it is possible to significantly improve a flexibility for installing device into another device.

The laminate accumulator has a plurality of unit cells connected in series or parallel and accommodated in a package case, and the plurality of unit cells are installed into another device as a module or a package. Since the package case is soft, the tension applied to the cells by the case cannot be large. Therefore, it is necessary to take some countermeasures against a positional shifting of the unit cells or a breaking of connectors caused by impacts or vibrations.

Disclosed in JP-A-2001-256938 is a case for accommodating the plurality of unit cells, having an upper case part and a lower case part each in the form of a half shell, and having positional restriction walls for restricting positions of the plurality of unit cells formed in the upper and lower case parts. The upper case part is connected to the lower case part between the positional restriction walls and side circumferential walls, so that the case parts are united. Disclosed in JP-A-2003-162989 is a method for preventing a breaking of a structure or a breaking of the connecting tabs caused by vibrations, by filling with resin in a support member accommodating at least two unit cells.

However, when the laminate accumulator is installed in a limited space particularly in a "dead" space as it is provided for example in a vehicle such as an automobile, it is required that the laminate accumulator is flatly formed and this flat structure is flexible enough to bend so that the laminate accumulator can be installed in a three-dimensionally flexible manner.

However, in the laminate accumulator of JP-A-2001-256938, for a restriction of the half-shell shape of the case, it is very difficult to flexibly installing the laminate accumulator in the limited space. Further, in the laminate accumulator of JP-A-2003-162989, since the resin is filled between the support member and the unit cells and a prescribed space is necessary between the support member and the unit cells, a space that the laminate accumulator can be installed thereto is restricted, and it is difficult to install the laminate accumulator in various shapes.

### SUMMARY OF THE INVENTION

The present invention is in view of the above-described disadvantages, and it is an object of the present invention to provide an accumulator structure that can be installed three-dimensionally with bending flexibility while the flat arrangement of the accumulator structure is maintained and a protection ability and an impact absorbing capability is maintained.

In order to achieve the object, an accumulator structure according to the appended claims is provided.

The accumulator structure according to the present invention can be installed three-dimensionally with bending flexibility while the flat arrangement of the accumulator structure is maintained and a protection ability and an impact absorbing capability is maintained.

### BRIEF DESCRIPTION OF THE DRAWINGS

Fig. 1 is a front view of a flat laminate cell showing an example of an accumulator to which the invention is applied;
Fig. 2 is a view seen in the direction of the arrow II in Fig. 1 to which the invention is applied;
Fig. 3 is a view of another arrangement of electrode terminals to which the invention is applied;
Fig. 4 is a view of yet another arrangement of the electrode terminals to which the invention is applied;
Fig. 5 is a front viewof a flat can installedtype accumulator cell to which the invention is applied;
Fig. 6 shows a series-connected module example in which a plurality of accumulators are connected;
Fig. 7 shows a parallel-connected module example to which the invention is applied;
Fig. 8 shows another parallel-connected module example to which the invention is applied;
Fig. 9 shows an example that a reinforcement member is provided between the electrode terminals of modules according to a first embodiment of the invention;
Fig. 10 shows an example that a reinforcement member is provided in the row-direction between cells in the module according to the first embodiment;
Fig. 11 shows an example that a reinforcement member is provided in the column-direction between cells in the module according to the first embodiment;
Fig. 12 shows a module package according to a second embodiment of the invention;
Fig. 13 shows an example of a package member according to the second embodiment;
Fig. 14 shows another example of the package member according to the second embodiment;
Fig. 15 shows a condition that the module is covered with a bag-shaped package member according to the second embodiment;
Fig. 16 shows a condition that the package is evacuated according to the second embodiment;
Fig. 17 shows a condition that the package is sealed between the columns according to the second embodiment;
Fig. 18 shows a condition that the package is sealed between the columns and the rows according to the second embodiment;
Fig. 19 shows a condition that the package member is adhesively sealed according to the second embodiment;
Fig. 20 shows a module package using a grid frame according to a third embodiment of the invention;
Fig. 21 is a view seen in the direction of the arrow XXI in Fig. 20 according to the third embodiment;
Fig. 22 shows another example of the grid frame according to the third embodiment;
Fig. 23 is a view seen in the direction of the arrow XXIII in Fig. 22 according to the third embodiment;
Fig. 24 shows an example of how the grid frame is partly provided according to the third embodiment;
Fig. 25 shows a module package using a frame according to a fourth embodiment of the invention;
Fig. 26 is a view seen in the direction of the arrow XXVI in Fig. 25 according to the fourth embodiment;
Fig. 27 shows an example of how separated frames are used according to the fourth embodiment;
Fig. 28 shows a module package using a frame provided with slits for absorbing impacts according to the fourth embodiment;
Fig. 29 is a view seen in the direction of the arrow XXIX in Fig. 28 according to the fourth embodiment;
Fig. 30 shows a module package having a hinge mechanism according to a fifth embodiment of the invention; and
Fig. 31 is a view seen in the direction of the arrow XXXI in Fig. 30 according to the fifth embodiment.

### DESCRIPTION OF THE PREFERRED EMBODIMENTS

Now, embodiments of the invention will be described in conjunction with the accompanying drawings.

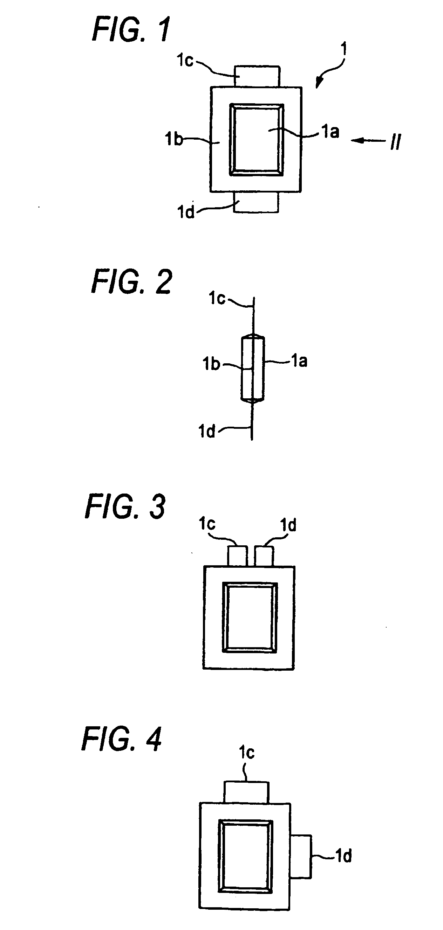

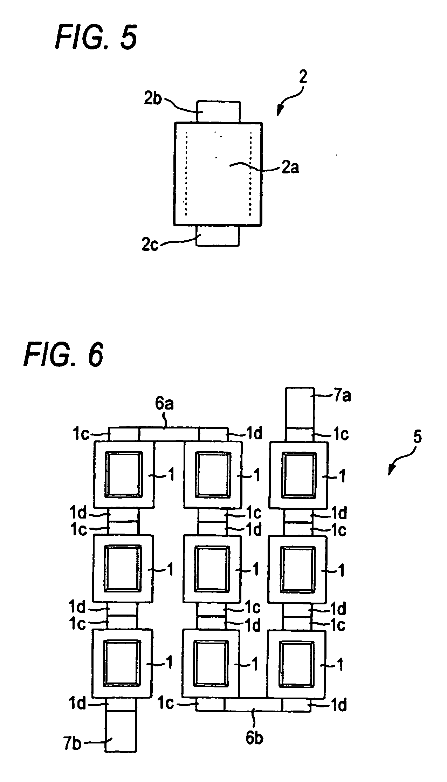

Figs. 1 to 5 show flat accumulators to which the invention is applied. Fig. 1 is a front view of a flat laminate cell as a flat accumulator (a unit cell), Fig. 2 is a view seen in the direction of the arrow II in Fig. 1, Fig. 3 shows another arrangement of electrode terminals, Fig. 4 shows yet another arrangement of electrode terminals, and Fig. 5 is a front view of a flat can installed type accumulator cell.

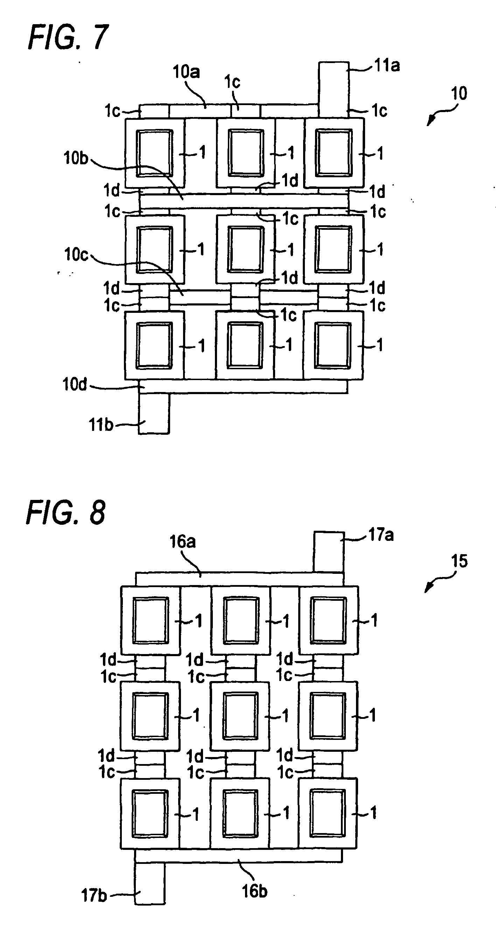

Figs. 6 to 8 show examples of modules each including a plurality of connected flat accumulators. Fig. 6 shows a series-connected module example, Fig. 7 shows a parallel-connected module example, and Fig. 8 shows another parallel-connected module example.

In Fig. 1, reference numeral 1 represents a flat laminate cell as an example of a flat accumulator accumulating electric energy that has an electrolytic layer and layers of electrodes enclosed in a laminated body. The flat laminate cell 1 includes a rectangular shaped, accumulator portion 1a and a sealing portion 1b as a package case. The accumulatorportion 1a includes a generating element having an electrolytic layer and layers of electrodes enclosed therein. The accumulator portion 1a is formed slightly thicker than the surroundings. The sealing portion 1b extends in a sheet shape around the accumulator portion 1a (see Fig. 2, a view seen in the direction of II in Fig. 1). The accumulator cell has two metal electrode terminals 1c and 1d exposed from the ends of the sealing portion 1b. A junction portion between the accumulator portion 1a and the electrode terminals 1c and 1d is sealed by the sealing portion 1b.

The accumulator portion 1a and the sealing portion 1b serving as the package case is for example made of a sheet type material (laminate sheet) produced by insulation-coating the surface of an aluminum-based metal layer with a resin layer. One electrode terminal 1c exposed from the laminate sheet serves as a positive electrode and the other electrode terminal 1d serves as a negative electrode. In this way, a thin flat unit cell that outputs voltage in the minimum unit (such as voltage corresponding to one dry cell) is produced.

Note that in Fig. 1, the electrode terminals 1c and 1d are provided at sides opposing each other among the four sides of the package case in a rectangular shape. Alternatively, for example, as shown in Fig. 3, the electrode terminals 1c and 1d may be provided at the same side of the rectangle, or as shown in Fig. 4, the electrode terminals 1c and 1d may be provided at different sides.

Meanwhile, Fig. 5 shows a flat can installed type accumulator cell 2 produced by enclosing an electrolytic layer and layers of electrodes in a can as another example of the flat accumulator accumulating electric energy. In the flat can installed type accumulator cell 2, a accumulator portion 2a having the electrolytic layer and the layers of electrodes enclosed therein is produced for example by welding an aluminum can having a substantially elliptical cross section, and an electrode terminal 2b as a positive electrode and an electrode terminal 2c as a negative electrode are provided on the opposing ends of the length of the accumulator portion 2a. Similarly, a thin flat unit cell that outputs minimum unit voltage is produced. Note that the electrode terminals 2b and 2c may be provided in the same arrangements as those in Figs. 3 and 4.

A plurality of such flat laminate cells 1 or such flat can installed type accumulator cells 2 are disposed in a common plane and connected in series or parallel to form a module for outputting prescribed voltage. In the following description, unit cells constituting the module will be described with reference to the flat laminate cell (hereinafter simply as "accumulator cell") 1. Meanwhile, the description applies the flat can installed type accumulator cell 2 or other types of accumulator cells having similar shapes. In addition, the description applies to a capacitor having a similar shape.

The module 5 in Fig. 6 has unit cells disposed in a matrix and connected in series to form a flat module. In the example in Fig. 6, accumulator cells 1 are disposed in a common plane in a matrix of three by three, and the positive electrode terminals 1c and the negative electrode terminals 1d of the three accumulator cells 1 are connected in the column direction in Fig. 6, and two series-connected columns are connected in series at the opposite sides to each other through bus bars 6a and 6b made of a conductive material. The module terminals 7a (positive electrode) and 7b (negative electrode) are provided at the electrode terminals 1c and 1d at the ends, respectively, and the module thus outputs voltage nine times as much as the output of a single accumulator cell 1.

Meanwhile, the modules 10 and 15 shown in Figs. 7 and 8 have unit cells arranged in a matrix and connected in parallel to form a flat module. In the module 10 in Fig. 7, the accumulator cells 1 as unit cells are arranged in a matrix of three by three in a common plane, three accumulator cells 1 are connected in series in the column direction in Fig. 7, and the three series-connected columns are connected in four locations in the row direction.

More specifically, bus bars 10a, 10b, 10c, and 10d are alternately connected at the back surface side and the front surface side in four locations altogether: in the uppermost part where the electrode terminals 1c are arranged in the row-direction, in the intermediate parts where the junction portions between the electrode terminals 1c and 1d are arranged in the row-direction, and in the lowermost part where the electrode terminals 1d are arranged in the row-direction. A module terminal 11a (positive electrode) and a module terminal 11b (negative electrode) are provided at the electrode terminals 1c and 1d at the ends, respectively, so that a module that outputs voltage three times that of a single accumulator cell 1 is provided.

In the module 15 in Fig. 8, accumulator cells 1 as unit cells are arranged in a matrix of three by three, and three accumulator cells 1 are connected in series in the column-direction in Fig. 8. The three series-connected columns are connected in the column-direction in two locations at the top and the bottom. More specifically, the uppermost part having the electrode terminals 1c arranged in the row-direction is connected by a bus bar 16a and the lowermost part having the electrode terminals 1d arranged in the row-direction is connected by a bus bar 16b. The electrode terminals 1c and 1d at the ends are provided with a module terminal 17a (positive electrode) and a module terminal 17b (negative electrode), respectively, so that a module that outputs voltage three times that of a single accumulator cell 1 is provided.

The above-described modules can be packaged, keeping their flat structure in the common plane, as a module package to be treated as an installment unit shape, and can be installed in a limited space such as in an automobile. Now, various forms of module packages will be described.

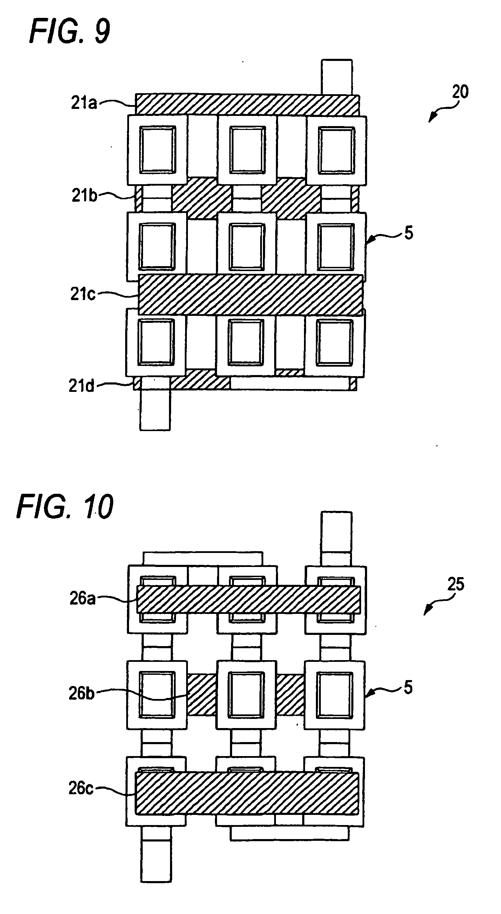

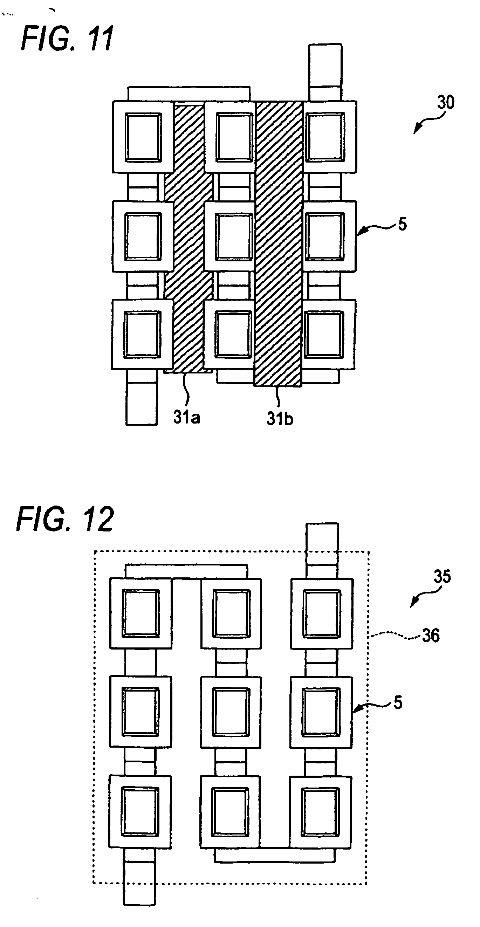

Now, a first embodiment of the invention will be described. Figs. 9 to 11 are related to the first embodiment of the present invention. Fig. 9 shows an example that a reinforcement member is provided between the electrode terminals in the module, Fig. 10 shows an example that a reinforcement member is provided in the row-direction between cells in the module, and Fig. 11 shows an example that a reinforcement member is provided in the column-direction between cells in the module.

In the first embodiment, the module having unit cells in a common plane is reinforced by a string-shaped member and formed as a package.

The module package 20 shown in Fig. 9 includes four strip-shaped reinforcement members 21a, 21b, 21c, and 21d as diagonally shaded in Fig. 9 that are attached to the module 5 between the electrode terminals arranged in the row-direction alternately at the front surface side and the back surface side. The reinforcement members 21a to 21d are made of an insulator tape such as fabric, leather, and resin, attached through an adhesive or the like, and suspended, so that the reinforcement and insulation between the electrode terminals can effectively be carried out while the bending flexibility is secured.

The module package shown in Fig. 10 is produced by providing the module 5 with three strip-shaped reinforcement members 26a, 26b, and 26c bendably suspended between the accumulator cells 1 as unit cells (flat accumulators) on a row-basis as diagonally shaded in Fig. 10. The reinforcement members 26a, 26b, and 26c are attached to the central parts (accumulator portions 1a) of the accumulator cells 1 at the front surface side and the back surface side of the module 5 with an adhesive or the like. The reinforcement members 26a, 26b, and 26c are made of a material such as a thin aluminum or copper plate that has high bending flexibility and is highly exoergic material, so that heat generated by the accumulator cells 1 can effectively be dissipated.

The module package 30 shown in Fig. 11 is produced by providing the module 5 with two strip-shaped reinforcement members 31a and 31b as diagonally shaded in Fig. 11 suspended in the column-direction between the accumulator cells 1 as unit cells, and the reinforcement members 31a and 31b are attached to the sides (sealing portions 1b) of the accumulator cells 1 at the front surface side and the back surface side of the module 5.

According to the first embodiment, the use of the strip-shaped reinforcement members restricts the positional relation in the string-direction, so that the positional relation between flat unit cells can be maintained. Therefore, when the package is hung, the row-column relation in the matrix arrangement in the module is unchanged. Furthermore, impacts applied on the accumulator structure can be absorbed by the strip-shaped reinforcement members.

Note that the first embodiment is particularly effectively applied to the module 5 having unit cells connected in series, while the embodiment is also applicable to the parallel-connected modules 10 and 15 or other modules having similar structures with unit cells in a common plane.

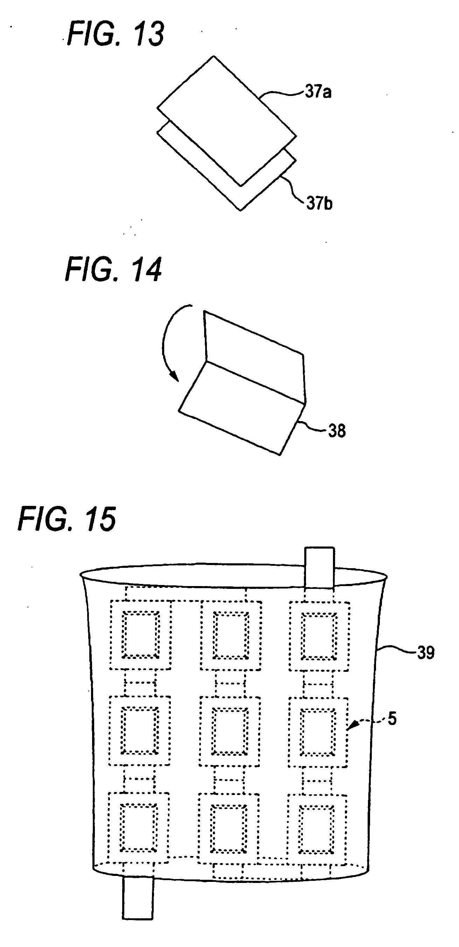

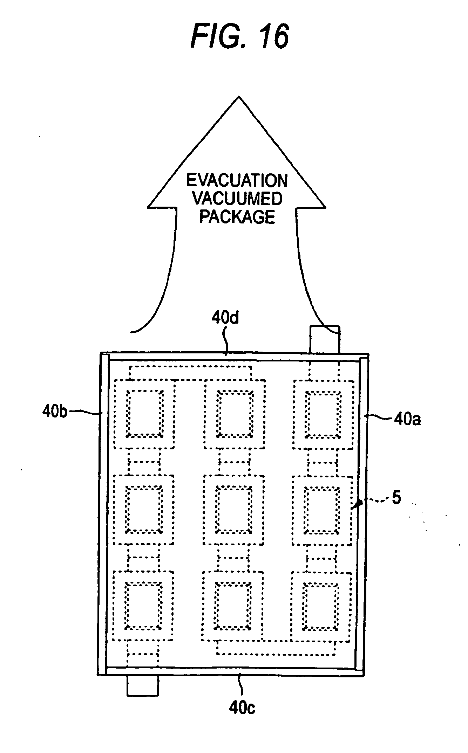

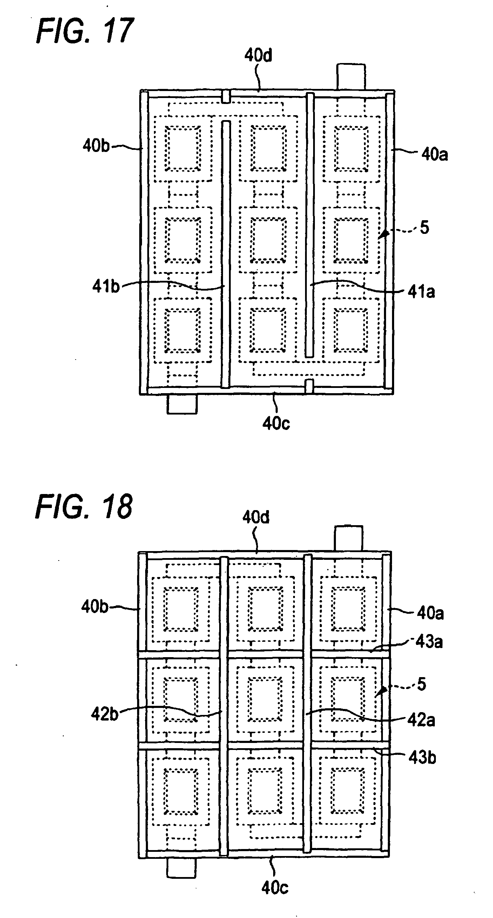

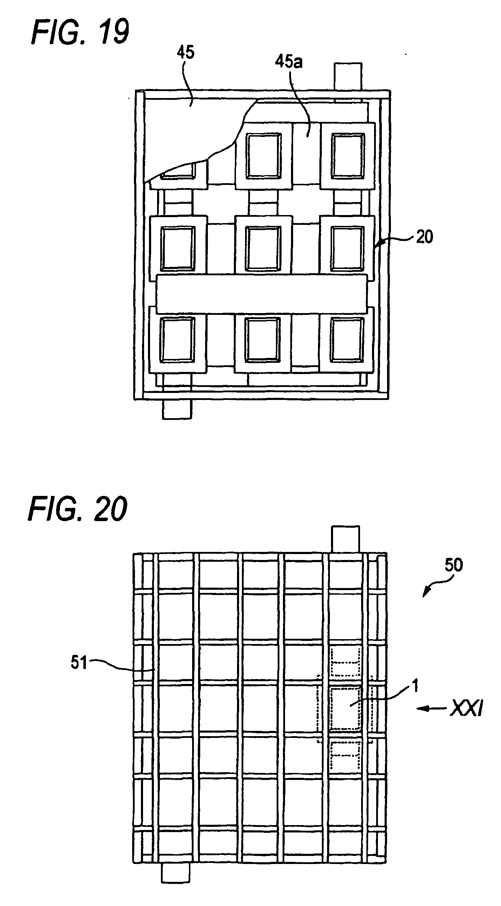

Now, a second embodiment of the invention will be described. Figs. 12 to 19 are related to the second embodiment of the invention. Fig. 12 shows a module package, Fig. 13 shows an example of a package member, Fig. 14 shows another example of the package member, Fig. 15 shows a condition that the module is covered with a bag-shaped package member, Fig. 16 shows a condition that the package is evacuated, Fig. 17 shows a condition that the package is sealed between the columns, Fig. 18 shows a condition that the package is sealed between the columns and the rows, and Fig. 19 shows a condition that the package member is adhesively sealed.

In the second embodiment, the entire module having unit cells in a common plane is covered with a case member and formed into a module package. Note that in the second embodiment, the module 5 having series-connected unit cells is covered with the case member, while the embodiment is applicable to the parallel-connected modules 10 and 15 and other similar modules having similar structures with unit cells in a common plane.

In the module package 35 shown in Fig. 12, the module 5 is sealed as it is covered with a sheet type case member 36. The case member 36 may be two sheet type members 37a and 37b as shown in Fig. 13 or a single sheet type member 38 in a folded state as shown in Fig. 14. The module 5 is entirely surrounded from the back surface side and the front surface side, sealed around the periphery, and formed into a package. As shown in Fig. 15, a bag-shaped sheet member 39 may be used as the case member 36. The module 5 is stored in the bag and the opening is sealed to form a package.

The sealing structure using the case member 36 can roughly be divided into package evacuation type or non-evacuation type. When the package is removed of air inside, the air inside the package is let go as shown in Fig. 16, the surrounding four sides 40a, 40b, 40c, and 40d (two sides for the bag-shaped sheet member 39) are sealed, and a vacuum package is produced. In this way, the surface of the sheet closely contacts to the unit cells and the accumulator structure can be reinforced, so that the positional relation between the unit cells can be kept. The vacuum package has a thick part for the thickness of the unit cells and a thin part between the unit cells, and therefore applied impacts can be absorbed at the thin part between the unit cells.

Meanwhile, when the package is not removed of air inside, the structure as shown in Fig. 17 or 18 may be used. In the example shown in Fig. 17, the module 5 having unit cells in series is sealed by seals 40a, 40b, 40c, and 40d at the four sides of the package, and there are also sealing portions 41a and 41b between the unit cells in the column direction. In the example shown in Fig. 18, seals 40a, 40b, 40c, and 40d at the four sides of the package as well as sealing portions 42a and 42b between unit cells in the column-direction and sealing portions 43a and 43b between rows that surround the unit cells are attached to the module 5 havingunit cells connected in series. In these examples, the same advantage is provided.

As shown in Fig. 19, sheet members 45 having one side coated with an adhesive 45a may be used as a case member. The sheet members 45 may wrap the entire module with the adhesive sides facing the module and may be joined with each other. In the example in Fig. 19, the entire module 20 is wrapped with the sheet members 45 that are joined.

In the second embodiment, the positional relation between the cells in the module is forcibly maintained by the function of the case member, so that the unit cells can surely be prevented from being shifting to one side by impacts or by its own weight. Consequently, the electrode terminals can be prevented from contacting each other and impacts can be absorbed.

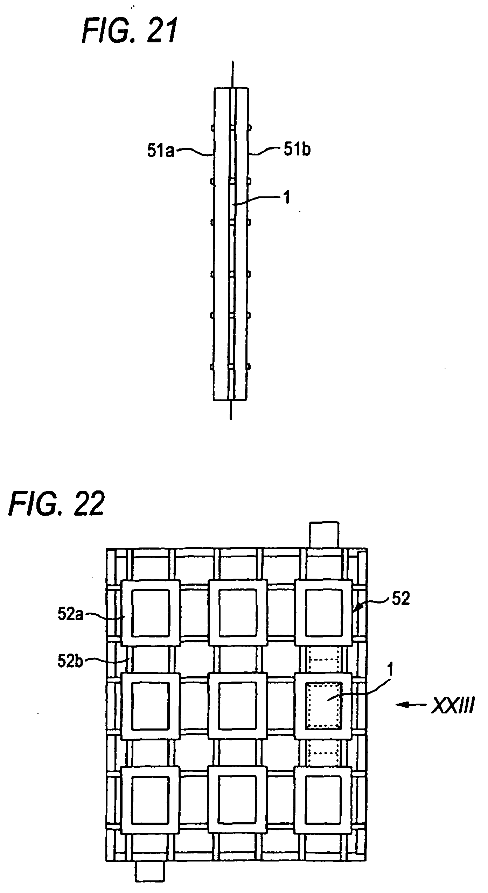

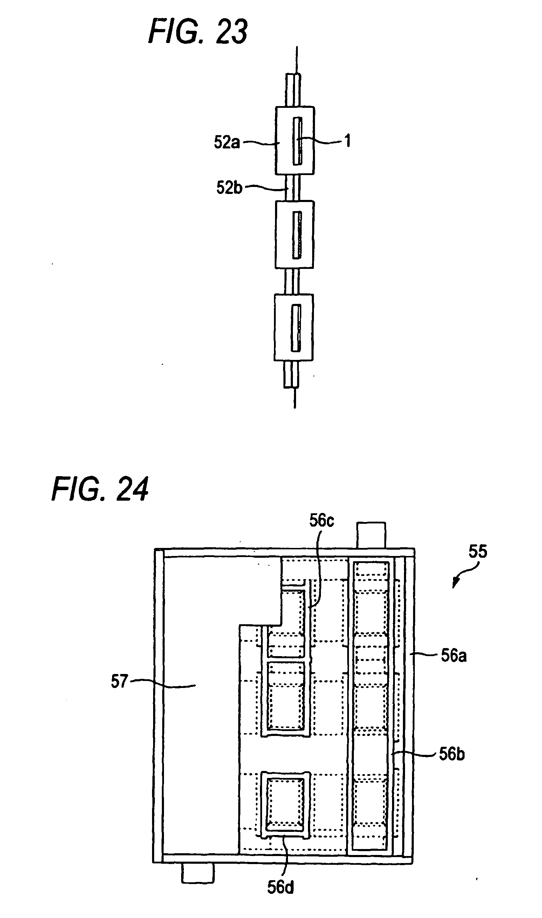

Now, a third embodiment of the present invention will be described. Figs. 20 to 24 are related to the third embodiment of the invention. Fig. 20 shows a module package using a grid frame, Fig. 21 is a view seen in the direction of the arrow XXI in Fig. 20, Fig. 22 shows another example of the grid frame, Fig. 23 is a view seen in the direction of the arrow XXIII in Fig. 22, and Fig. 24 shows an example that grid frames are partly provided.

In the third embodiment, the module having unit cells in a common plane is reinforced using the grid frame as a frame member corresponding to a flat alignment structure of the unit cells.

The module package 50 shown in Fig. 20 is produced using a plate shaped grid frame 51 corresponding to the matrix arrangement of the unit cells in the module. The grid frame 51 may be made of wood, resin, or a metal material such as aluminum (with an insulating film if necessary) , and individually surrounds each of the unit cells (flat accumulators).

In this case, as shown in Fig. 21 (as seen in the direction of the arrow XXI in Fig. 20), a pair of frames 51a and 51b are desirably used as the frame 51 for each module, so that the module can be held between the front surface side and the back surface side and the unit cells 1 (accumulator cells 1) can be held as they are pressed between the front surface side and the back surface side. Inthisway, the accumulator structure of the unit cells is reinforced, so that the positional relation of the unit cells can be kept. The cells can be protected against impacts by the frame 51 and safety can be improved.

A grid frame 52 may be provided corresponding to the matrix arrangement of the unit cells, so that as shown in Fig. 22, the rigidity in the region surrounding the cells is high while the rigidity is relatively low in the region not surrounding the cells. More specifically, as shown in Fig. 22, the grid frame 52 corresponds to the matrix arrangement of the unit cells, the frame parts 52a surrounding the cells have a large width, and the connecting parts 52b between the frame parts 52a have a small width. As shown in Fig. 23 (as seen in the direction of the arrow XXIII in Fig. 22), the module is held between the front surface side and the back surface side for fixation as the parts are fitted. Note that the frame part 52a may have a larger thickness and the connection part 52b may have a smaller thickness.

In the grid frame 52, the matrix arrangement of the unit cells is maintainedwhile the part having relatively low rigidity can absorb impacts and the part having higher rigidity can protect the cells.

Note that the grid frames 51 and 52 described above may also be applied to modules 10 and 15 and other modules having similar matrix arrangement of the unit cells, the module packages 20, 25, and 30 according to the first embodiment having their matrix arrangement structures reinforced with the strip-shaped members, and the module package 35 according to the second embodiment sealed by covering the module with the sheet type case member. The above-described grid frame may be applied to these modules or module packages only on one side if the other side can be held.

The grid frame reinforcing the matrix structure of the unit cells may be provided only at the part desired to be protected in the alignment structure. Fig. 24 shows a module package 55 in which the grid frames are provided only in the part to be protected in the matrix structure of the unit cells. The grid frames 56a, 56b, 56c, and 56d in various shapes for the unit cells in the module are provided in the covering 57 that covers the entire module.

The grid frame 56a is an outer frame for holding the outer circumferential part of the entire module. The grid frame 56b is a reinforcement frame that surrounds and protects three unit cells, the grid frame 56c is a reinforcement frame that surrounds and protects two unit cells, the grid frame 56d is a reinforcement frame that surrounds and protects one unit cell, and the entire structure is covered with the covering 57.

In this way, for the unit cells in the module, reinforcement frames can be disposed in shapes and positions optimally provided based on the matrix structure and a connection structure of the unit cells, in order to improve a flexibility of the accumulator structure.

In the third embodiment, the matrix structure of the unit cells is reinforced, so that the protection function against impacts is provided, while a three-dimensional bending shape may be provided depending on the shape of a grid frame. For example, the structure may be used instead of an indoor trim in an automobile and provided in a large form suitable for being installed into the top trim, which improves the space use efficiency.

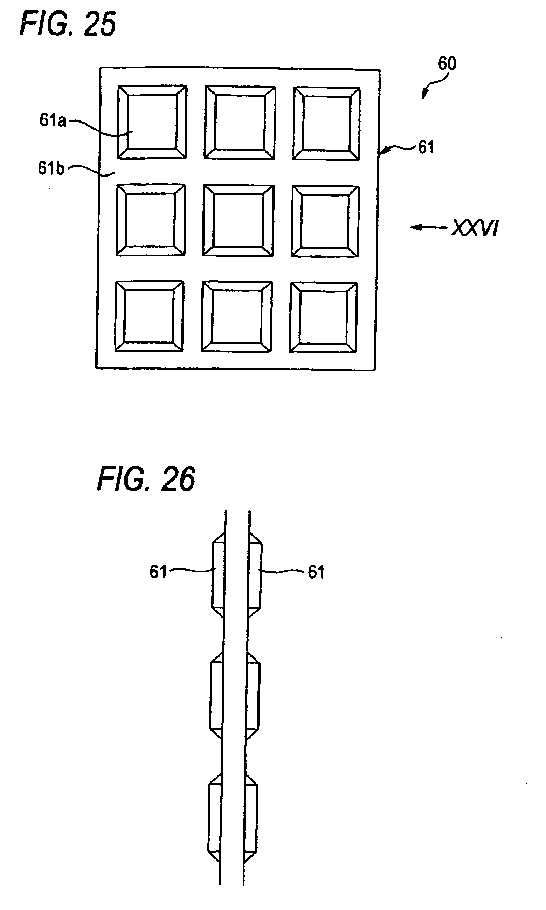

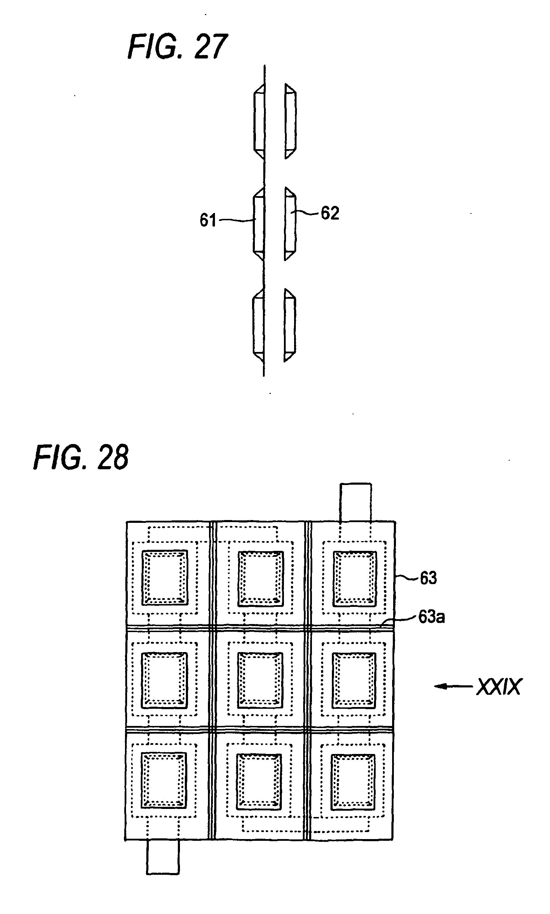

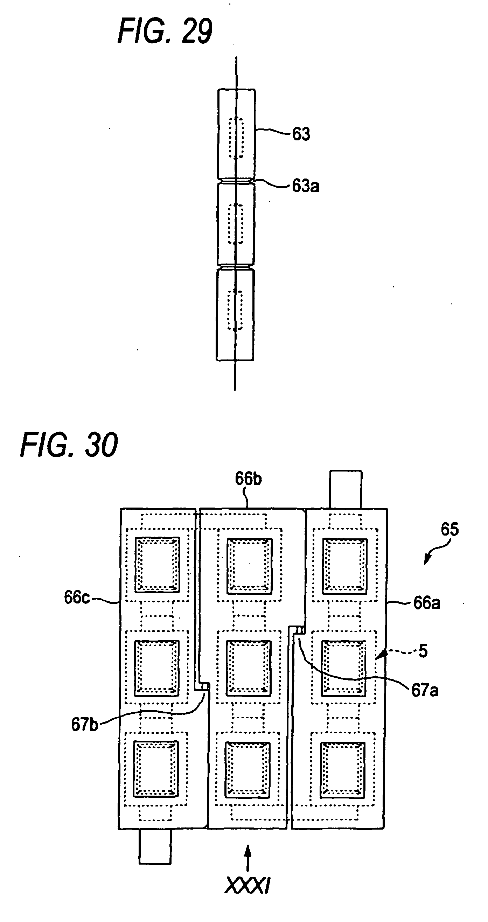

Now, a fourth embodiment of the invention will be described. Figs. 25 to 29 are related to the fourth embodiment of the invention. Fig. 25 shows a module package using a frame member, Fig. 26 is a view seen in the direction of the arrow XXVI in Fig. 25, Fig. 27 shows an example that separated frames are used, Fig. 28 shows a module package using a frame provided with slits for absorbing impacts, and Fig. 29 is a view seen in the direction of the arrow XXIX in Fig. 28.

In the fourth embodiment, a frame produced by integrating a grid frame corresponding to the matrix structure of the unit cells and a covering is used as a frame member to accommodate a module or a module package. The embodiment may be applied to the modules 10 and 15, modules having other similar matrix structures with unit cells in a common plane, the module packages 20, 25, and 30 according to the first embodiment having their matrix structures reinforced with the strip-shaped members, and the module package 35 according to the second embodiment sealed by covering the module with the sheet type case member.

The module package 60 shown in Fig. 25 includes a frame 61 along the matrix structure of the unit cells 1 (accumulator cells 1). The frame includes a raised surrounding part 61a that surrounds and covers the accumulator portions 1a of the unit cells 1 and a flat part 61b that holds the sealing portions 1b and the electrode terminals 1c and 1d of the unit cells 1.

The frame 61 is produced by press-molding a resin material or an aluminum material, and as shown in Fig. 26 (as seen in the direction of the arrow XXVI in Fig. 25), the frame holds and seals the module or module package between the front surface side and back surface side.

In this case, as shown in Fig. 27, for one surface side of the module, individual frames 62 separated corresponding to the raised shapes of the accumulator portions 1a may be used, and the individual frames 62 may be attached the accumulator portions 1a on the opposite side of the module or module package provided with the frame 61 sealing, so that the difference in rigidity between the part to be protected against impacts (accumulator portions 1a) and the part that absorbs the impacts may be increased.

In order to increase the difference in rigidity between the part to be protected against impacts (accumulator portions 1a) and the part that absorbs the impacts, the use of a frame 63 as shown in Fig. 28 is effective. The frame 63 is provided with slits 63a that segment the region surrounding cells in the row and column directions and thus holds the module or module package between the front surface side and the back surface side for sealing. The slit 63a may be a V-shaped (or U-shaped) incision to form a thinned groove part as in Fig. 29 (as seen in the direction of XXIX in Fig. 28), so that externally applied impacts can effectively be absorbed.

In the fourth embodiment, the positional relation between the unit cells is forcibly maintained in order to prevent the unit cells from shifting to one side by impacts or their own weight, while the part that should be protected against impacts can surely be protected.

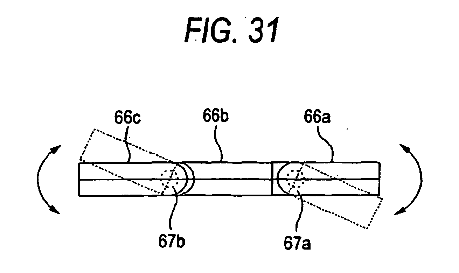

Now, a fifth embodiment of the invention will be described. Figs. 30 and 31 are related to the fifth embodiment of the invention. Fig. 30 shows a module package having a hinge mechanism, and Fig. 31 is a view seen in the direction of the arrow XXXI in Fig. 30.

In the fifth embodiment, the hinge function is provided for the matrix structure in the module, and the hinge mechanism provides more flexibility for bending.

The module package 65 shown in Fig. 30 is an application of the embodiment to a module 5 having unit cells arranged in a matrix in a common plane and connected in series, and three accumulator cells 1 arranged in the column direction in Fig. 30 are divided into three parts as they are surrounded by frames 66a, 66b, and 66c for protection. That is, the module 5 is divided into three alignment blocks in which each of the alignment blocks comprises adjacent ones of the unit cells 1, and the each of the alignment blocks is a subset of the unit cells 1, and the frames 66a, 66b, and 66c separately cover the unit cells 1 for each of the alignment blocks. Meanwhile, the frame 66a at the end and the central frame 66b are connected with each other through a hinge 67a, and the central frame 66b and the frame 66c at the other end are connected with each other through a hinge 67b. The hinges 67a and 67b allow the frame 66a, 66b, and 66c to turn and bend in the row direction as shown in Fig. 31 (as seen in the direction of the arrow XXXI in Fig. 30).

Note that the frames 66a, 66b, and 66c surrounding the cells are formed as a grid frame corresponding to the case storing the cells or the alignment structure of the cells and desirably hold the cells between the front surface side and the back surface side. In this case, the hinge mechanism may be provided for the frames on both sides or only on one side.

In the fifth embodiment, the protection function can be secured by surrounding the cells, and the bending flexibility provided by the hinge mechanism allows the structure to be fitted more closely to the shape of an installment location, and the bending part by the hinge mechanism can absorb applied impacts.

## Claims

1. An accumulator structure comprising:
- a plurality of individual flat accumulators each comprising a flat laminate cell (1) which in turn comprises an accumulator portion (1a) electrically connected with two electrode terminals (1c, 1d), wherein the junctions between the electrode terminals (1c, 1d) and the accumulator portion (1a) are sealed by a sealing portion (1b) or can, which further extends around the accumulator portion (1a), the flat accumulators being flatly disposed in a common plane, each of the flat accumulators electrically connected to at least another of the flat accumulators via the electrode terminals (1c, 1d); and
- a flexible member (21a-21d; 26a-26c; 31a, 31b) that flexibly fixes each of the flat accumulators to at least other one of the flat accumulators, and thus restricts the positional relationship in the electrical connection direction, whilst allowing bending of the accumulator structure.

2. The accumulator structure according to claim 1,
wherein the flexible member (21 a-21 d; 26a-26c; 31 a, 31 b) comprises a reinforcement member bendably suspended between ones of the plurality of flat accumulators.

3. The accumulator structure according to claim 1,
wherein the flexible member (36) comprises a case member (36) that covers the plurality of flat accumulators disposed in the common plane in close contact and fixes the plurality of flat accumulators.

4. The accumulator structure according to claim 3,
wherein the case member is a bag-shaped member (39) in close contact to the plurality of flat accumulators, so as to fix the plurality of flat accumulators,
wherein the plurality of accumulators is covered with the bag-shaped member (39), and
wherein the bag-shaped member (39) is evacuated inside and sealed.

5. The accumulator structure according to claim 3,
wherein the case member is a sheet type member (45) having one surface coated with an adhesive (45a).

6. The accumulator structure according to claim 1,
wherein the flexible member comprises a sheet type member (38) that covers the plurality of flat accumulators and is sealed between each of the flat accumulators.

7. The accumulator structure according to claim 1,
wherein the flexible member comprises a frame member (51) that corresponds to and substantially surrounds the plurality of flat accumulators.

8. The accumulator structure according to claim 7,
wherein a part (52b) of the frame member (52) not surrounding the flat accumulators is less rigid than another part (52a) of the frame member (52) surrounding the flat accumulators.

9. The accumulator structure according to claim 7,
wherein the frame member (52) partially corresponds to an alignment of the plurality of flat accumulators.

10. The accumulator structure according to claim 1,
wherein the flexible member comprises a frame member (63) that covers the flat accumulators and comprises surrounding parts that individually surround each of the flat accumulators.

11. The accumulator structure according to claim 10,
wherein each of the surrounding parts is segmented by a groove-shaped part (63a), forming a thinner part in the width direction.

12. The accumulator structure according to claim 1,
wherein the flexible member comprises a plurality of surrounding frame members (66a-66c) that separately cover the plurality of flat accumulators for an alignment block in the common plane, wherein the frame members (66a-66c) are connected by a hinge mechanism (67a, 67b).

## Patentansprüche

1. Akkumulatoranordnung, die folgendes aufweist:
- eine Vielzahl von einzelnen Flachakkumulatoren, von denen jeder eine erste flache Schichtzelle (1) aufweist, die wiederum einen Akkumulatorbereich (1a) aufweist, der mit zwei Elektrodenanschlüssen (1c, 1d) elektrisch verbunden ist, wobei die Übergänge zwischen den Elektrodenanschlüssen (1c, 1d) und dem Akkumulatorbereich (1a) durch einen Dichtungsbereich (1b) oder ein Dichtungsbehältnis abgedichtet sind, der bzw. das sich ferner um den Akkumulatorbereich (1a) herum erstreckt, wobei die Flachakkumulatoren in einer gemeinsamen Ebene flach angeordnet sind und wobei jeder der Flachakkumulatoren über die Elektrodenanschlüsse (1c, 1d) mit mindestens einem weiteren der Flachakkumulatoren elektrisch verbunden ist; und
- ein flexibles Element (21a-21d; 26a-26c; 31a, 31b), das jeden der Flachakkumulatoren an mindestens einem weiteren der Flachakkumulatoren flexibel fixiert und dadurch die positionsmäßige Beziehung in der elektrischen Verbindungsrichtung begrenzt, während es ein Biegen der Akkumulatoranordnung ermöglicht.

2. Akkumulatoranordnung nach Anspruch 1,
wobei das flexible Element (21 a-21 d; 26a-26c; 31 a, 31 b) ein Verstärkungselement aufweist, das zwischen den einen der Vielzahl von Flachakkumulatoren biegsam aufgehängt ist.

3. Akkumulatoranordnung nach Anspruch 1,
wobei das flexible Element (36) ein Umschließungselement (36) aufweist, das die Vielzahl der in der gemeinsamen Ebene angeordneten Flachakkumulatoren in enger Berührung bedeckt und die Vielzahl der Flachakkumulatoren fixiert.

4. Akkumulatoranordnung nach Anspruch 3,
wobei es sich bei dem Umschließungselement um ein beutelförmiges Element (39) in enger Berührung mit der Vielzahl der Flachakkumulatoren handelt, so daß die Vielzahl der Flachakkumulatoren festgelegt ist,
wobei die Vielzahl der Akkumulatoren von dem beutelförmigen Element (39) bedeckt ist, und
wobei das beutelförmige Element im Inneren evakuiert und dicht verschlossen ist.

5. Akkumulatoranordnung nach Anspruch 3,
wobei es sich bei dem Umschließungselement um flächenkörperartiges Element (45) handelt, bei dem eine Oberfläche mit einem Klebstoff (45a) beschichtet ist.

6. Akkumulatoranordnung nach Anspruch 1,
wobei das flexible Element ein flächenkörperartiges Element (38) aufweist, das die Vielzahl der Flachakkumulatoren bedeckt und zwischen den jeweiligen Flachakkumulatoren dicht verschlossen ist.

7. Akkumulatoranordnung nach Anspruch 1,
wobei das flexible Element ein Rahmenelement (51) aufweist, das der Vielzahl der Flachakkumulatoren entspricht und diese im wesentlichen umgibt.

8. Akkumulatoranordnung nach Anspruch 7,
wobei ein die Flachakkumulatoren nicht umgebender Teil (52b) des Rahmenelements (52) weniger steif ist als ein anderer, die Flachakkumulatoren umgebender Teil (52a) des Rahmenelements (52).

9. Akkumulatoranordnung nach Anspruch 7,
wobei das Rahmenelement (52) einer Ausrichtung der Vielzahl von Flachakkumulatoren partiell entspricht.

10. Akkumulatoranordnung nach Anspruch 1,
wobei das flexible Element ein Rahmenelement (63) aufweist, das die Flachakkumulatoren bedeckt und umgebende Teile aufweist, die jeden der Flachakkumulatoren einzeln umgeben.

11. Akkumulatoranordnung nach Anspruch 10,
wobei jedes der umgebenden Teile durch ein nutförmiges Teil (63a) segmentiert ist, so daß ein dünneres Teil in der Breitenrichtung gebildet ist.

12. Akkumulatoranordnung nach Anspruch 1,
wobei das flexible Element eine Vielzahl von umgebenden Rahmenelementen (66a-66c) aufweist, die die Vielzahl der Flachakkumulatoren für einen Ausrichtungsblock in der gemeinsamen Ebene separat bedecken, wobei die Rahmenelemente (66a-66c) mit einem Gelenkmechanismus (67a, 67b) verbunden sind.

## Revendications

1. Structure d'accumulateur comprenant:
- une pluralité d'accumulateurs plats individuels, comprenant chacun une pile stratifiée plate (1) qui comprend à son tour une partie d'accumulateur (1a) raccordée électriquement avec deux bornes d'électrode (1c, 1d), dans laquelle les jonctions entre les bornes d'électrode (1c, 1d) et la partie d'accumulateur (1a) sont hermétiquement fermées par une partie d'étanchéité (1b) ou bac, qui s'étend en outre autour de la partie d'accumulateur (1a), les accumulateurs plats étant disposés à plat dans un plan commun, chacun des accumulateurs plats étant raccordé électriquement au moins à un autre des accumulateurs plats via les bornes d'électrode (1c, 1d); et
- un élément flexible (21a-21d; 26a-26c; 31a, 31b) qui fixe de manière flexible chacun des accumulateurs plats sur au moins un autre des accumulateurs plats, et limite ainsi la relation positionnelle dans la direction de raccordement électrique, tout en permettant la flexion de la structure d'accumulateur.

2. Structure d'accumulateur selon la revendication 1,
dans laquelle l'élément flexible (21 a-21 d; 26a-26c; 31a, 31b) comprend un élément de renforcement suspendu de manière fléchie entre les accumulateurs de la pluralité d'accumulateurs plats.

3. Structure d'accumulateur selon la revendication 1,
dans laquelle l'élément flexible (36) comprend un élément de boîtier (36) qui recouvre la pluralité d'accumulateurs plats disposés dans le plan commun en contact immédiat et fixe la pluralité d'accumulateurs plats.

4. Structure d'accumulateur selon la revendication 3,
dans laquelle l'élément de boîtier est un élément en forme de sac (39) en contact immédiat avec la pluralité d'accumulateurs plats, afin de fixer la pluralité d'accumulateurs plats,
dans laquelle la pluralité d'accumulateurs est recouverte avec l'élément en forme de sac (39), et
dans laquelle l'élément en forme de sac (39) est mis sous vide à l'intérieur et hermétiquement fermé.

5. Structure d'accumulateur selon la revendication 3,
dans laquelle l'élément de boîtier est un élément de type à feuille (45) ayant une surface recouverte avec un adhésif (45a).

6. Structure d'accumulateur selon la revendication 1,
dans laquelle l'élément flexible comprend un élément de type à feuille (38) qui recouvre la pluralité d'accumulateurs plats et est hermétiquement fermé entre chacun des accumulateurs plats.

7. Structure d'accumulateur selon la revendication 1,
dans laquelle l'élément flexible comprend un élément de châssis (51) qui correspond à et entoure sensiblement la pluralité d'accumulateurs plats.

8. Structure d'accumulateur selon la revendication 7,
dans laquelle une partie (52b) de l'élément de châssis (52) n'entourant pas les accumulateurs plats est moins rigide qu'une autre partie (52a) de l'élément de châssis (52) entourant les accumulateurs plats.

9. Structure d'accumulateur selon la revendication 7,
dans laquelle l'élément de châssis (52) correspond partiellement à un alignement de la pluralité d'accumulateurs plats.

10. Structure d'accumulateur selon la revendication 1,
dans laquelle l'élément flexible comprend un élément de châssis (63) qui recouvre les accumulateurs plats et comprend des parties périphériques qui entourent individuellement chacun des accumulateurs plats.

11. Structure d'accumulateur selon la revendication 10,
dans laquelle chacune des parties périphériques est segmentée par une partie en forme de rainure (63a), formant une partie plus fine dans le sens de la largeur.

12. Structure d'accumulateur selon la revendication 1,
dans laquelle l'élément flexible comprend une pluralité d'éléments de châssis périphériques (66a-66c) qui recouvre séparément la pluralité d'accumulateurs plats pour un bloc d'alignement dans le plan commun, dans laquelle les éléments de châssis (66a-66c) sont raccordés par un mécanisme de charnière (67a, 67b).
